# FASCICULE DE BREVET EUROPEEN

(11) **EP 3 390 315 B1**
(45) Date de publication et mention de la délivrance du brevet: **17.11.2021**
(21) Numéro de dépôt: 16808663.5
(22) Date de dépôt: 08.12.2016
(51) Int. Cl.: B24C 1/06, C03C 15/00, C03C 19/00

(54) **PROCÉDÉ DE FABRICATION D'UNE FEUILLE DE VERRE DÉPOLIE**
HERSTELLUNGSVERFAHREN EINER MATTIERTEN GLASSCHEIBE
METHOD FOR MANUFACTURING A FROSTED GLASS SHEET

(30) Priorité: 16.12.2015 EP 15200536
(43) Date de publication de la demande: 24.10.2018
(73) Titulaire: AGC Glass Europe, 1348 Louvain-La-Neuve (BE)
(72) Inventeur: DENEIL, Christine, 5250 Ohey (BE)
(74) Mandataire: AGC Glass Europe
(86) Numéro de dépôt international: PCT/EP2016/080291
(87) Numéro de publication internationale: WO 2017/102551

(56) Documents cités:
- EP-A1- 1 236 696
- EP-A1- 1 818 317
- EP-A1- 2 075 238
- EP-A2- 1 882 551
- EP-B1- 1 924 404
- US-A- 5 011 443
- DATABASE WPI Week 201503 Thomson Scientific, London, GB; AN 2015-02032M XP002766237, -& CN 104 109 908 A (CHANGSHA YUSHUN TOUCH TECHNOLOGY CO LTD) 22 octobre 2014 (2014-10-22)
- HAMDANI A H ET AL: "Laser etching rates of sapphire glass using metal targets", JOURNAL OF PHYSICS: CONFERENCE SERIES, INSTITUTE OF PHYSICS PUBLISHING, BRISTOL, GB, vol. 439, no. 1, 10 juin 2013 (2013-06-10) , page 12051, XP020245909, ISSN: 1742-6596, DOI: 10.1088/1742-6596/439/1/012051

## Description

### 1. Domaine de l'invention

La présente invention se situe de façon générale dans le domaine du dépolissage de feuilles de verre.

La présente invention concerne un procédé de fabrication d'une feuille de verre dépolie. Une feuille de verre « dépolie » est une feuille de verre translucide avec une finition satinée qui diffuse la lumière et peut peut être utilisée à des fins décoratives et/ou à une fin de protection de la vie privée, de l'intimité (« privacy ») et/ou à une fin antireflet ou anti-scintillement (« non-sparkling »). Ce type de verre est obtenu en enlevant une certaine quantité de matière du verre en surface, donnant une texture spécifique et/ou de la rugosité.

Par exemple, la feuille de verre obtenue par le procédé de l'invention peut être utilisée, en tirant parti de ses propriétés décoratives et/ou de « privacy », en tant qu'élément de mobilier (table, étagère, porte d'armoire, présentoir de magasin,...), paroi, revêtement mural ou porte ou encore, en tirant parti de ses propriétés antireflets ou anti-scintillement, en tant que couvercle de protection dans le domaine de l'affichage digital ou en encore en horlogerie.

### 2. Solutions de l'art antérieur

Dans le domaine des applications décoratives, des feuilles de verre dépolies sont connues depuis longtemps. Par feuille de verre dépolie, on entend une feuille de verre obtenue par l'enlèvement d'une certaine quantité de matière sur une partie au moins de sa surface, ce qui donne une certaine texture et/ou de la rugosité à ladite surface. On parle généralement de « dépolissage chimique» ou « matage » quand l'enlèvement de matière se fait par attaque/réaction chimique (acide ou basique) et de « dépolissage mécanique» ou « sablage » quand l'enlèvement de matière se fait par attaque mécanique (par exemple, projection de grains).

La méthode de matage du verre consiste de manière connue à mettre en contact la surface d'un article en verre avec un composant fluoré tel que l'acide fluorhydrique et/ou ses sels. L'utilisation de tels produits chimiques est évidemment préjudiciable pour l'environnement et la santé et requiert des mesures assez lourdes et coûteuses pour implémenter en toute sécurité à l'échelle industrielle cette méthode (stockage des solutions de matage, leur manipulation, leur traitement, leur recyclage, etc). De plus, la méthode de dépolissage chimique est beaucoup plus sensible à l'uniformité/la propreté de la surface attaquée. Ainsi, bien souvent, afin d'obtenir un dépolissage uniforme de la surface, il convient de nettoyer au préalable cette surface. De plus, dans le cas d'une feuille de verre de type flotté comportant une face à base d'étain (provenant de la diffusion au départ du bain d'étain dans le procédé de flottage), celle-ci ne subira pas le dépolissage exactement de la même façon que l'autre face, ce qui génère une différence de résultat entre les deux faces matées de la feuille. Finalement, la méthode de dépolissage chimique ne permet pas d'attaquer la surface d'un verre dit saphir, qui est connu pour être complètement inerte face à un tel traitement.

La méthode de sablage du verre consiste quant à elle de manière connue à projeter à grande vitesse des grains d'un matériau abrasif sur la surface de l'article en verre. La projection des grains à grande vitesse est permise grâce à l'utilisation d'un gaz comprimé ou ventilé. Le gaz utilisé est, par exemple, de l'air sec. Le sablage peut être réalisé en utilisant soit une machine à pistolet manuel, soit une chambre de sablage automatisée constituée d'un convoyeur faisant défiler l'article en verre à une vitesse constante, et d'un ou plusieurs systèmes consécutifs d'apport du matériau abrasif. Les grains du matériau abrasif utilisés dans un sablage classique selon l'invention sont de nature angulaire afin de permettre l'érosion de matière à la surface de l'article en verre et d'obtenir le dépolissage. Le matériau abrasif est choisi classiquement parmi le sable naturel, les sables synthétiques, le corindon, l'hématite, le grenat et le carbure de silicium. Les grains du matériau abrasif couramment utilisé présentent un diamètre de l'ordre d'une centaine de microns.

La méthode classique de sablage ne permet toutefois d'atteindre que des rugosités très grossières et d'aspect très différent par rapport à une surface dépolie chimiquement et ne permet dès lors pas l'accès à des rugosités fines absolument requises par exemple pour obtenir une surface antireflet ou anti-scintillement (« non-sparkling »).

Une autre méthode de dépolissage mécanique de surfaces a également été décrite. Il s'agit d'une méthode comprenant (i) une étape de fluidisation de particules (en particulier, d'oxyde métallique) par une technique dit de « lit fluidisé » et (ii) une étape de traitement d'une surface d'un article par soumission de ladite surface à un flux des dites particules fluidisées. Une telle méthode est connue des documents RU2160721, US5201150 et EP 1 882 551 A2.

En particulier, le document EP 1 882 551 A2 décrit le dépolissage chimique d'articles en matériaux divers tels qu'en métal, en alliage, ou en verre, en utilisant une fluidisation de particules dans un premier fluide et un deuxième fluide, le premier fluide étant un gaz et le deuxième fluide étant un liquide. Les particules utilisées dans la méthode de EP 1 882 551 A2 sont décrites comme ayant une taille inférieure à un micromètre et, de préférence, de taille comprise entre 0,3 et 0,9 micromètre. Toutefois, des essais ont montré que de telles tailles de particules ne parvenaient pas à dépolir de façon satisfaisante une feuille de verre (obtention d'un voilage ou « haze » trop important, texture pratiquement inexistante, inhomogénéité de surface, etc) en utilisant la méthode décrite.

### 3. Objectifs de l'invention

L'invention, dans au moins un de ses modes de réalisation, a pour objectif de fournir un procédé de fabrication d'une feuille de verre dépolie qui résout les inconvénients de l'état de la technique.

L'invention, dans au moins un de ses modes de réalisation, a également pour objectif de fournir un procédé de fabrication d'une feuille de verre dépolie permettant un dépolissage uniforme et homogène sur l'ensemble de la surface traitée et donnant une texture/aspect proche de ceux obtenus par dépolissage chimique.

De plus, l'invention, dans au moins un de ses modes de réalisation, a également pour objectif de fournir un procédé de fabrication d'une feuille de verre dépolie qui est moins sensible à l'uniformité/la propreté de la surface attaquée.

L'invention, dans au moins un de ses modes de réalisation, a également pour objectif de fournir un procédé de fabrication d'une feuille de verre dépolie qui est respectueux de l'environnement et aisé d'un point de vue de la sécurité. En particulier, l'invention, selon ce mode de réalisation, a pour objectif de fournir un procédé de fabrication d'une feuille de verre dépolie qui n'utilise pas de composants fluorés. Toujours, selon ce mode de réalisation, l'invention a pour objectif de fournir un procédé de fabrication d'une feuille de verre dépolie qui permet d'obtenir un dépolissage très proche visuellement et au toucher de celui que l'on peut obtenir en utilisant un dépolissage chimique.

De plus, l'invention, dans au moins un de ses modes de réalisation, a également pour objectif de fournir un procédé qui permet le dépolissage de verre saphir, inaccessible avec des méthodes usuelles de matage chimique et difficilement contrôlable avec une méthode mécanique classique type sablage.

Finalement, un autre objectif de l'invention, dans au moins un de ses modes de réalisation, est de fournir un procédé de fabrication d'une feuille de verre dépolie aisé et peu coûteux à mettre en œuvre industriellement.

### 4. Exposé de l'invention

L'invention concerne une méthode de fabrication d'une feuille de verre silico-sodocalcique, alumino-silicate, borosilicate ou saphir dépolie comprenant :
(i) une étape de fluidisation de particules dans un premier fluide et un deuxième fluide par une technique de lit fluidisé, le premier fluide étant un gaz et le deuxième fluide étant un liquide, de manière à générer un flux des particules fluidisées présentant une vitesse comprise entre 5 et 20 mètres par seconde; et
(ii) une étape de traitement d'une surface d'une feuille de verre par soumission de ladite surface audit flux de particules fluidisées.

Selon l'invention, les particules ont une taille moyenne comprise entre 5 et 500 microns.

Ainsi, l'invention repose sur une approche nouvelle et inventive. Les inventeurs ont en effet mis en évidence qu'il était possible, dans une méthode de dépolissage mécanique du type lit fluidisé biphasique, en choisissant des particules de tailles comprise entre 5 et 500 microns, d'obtenir une feuille des verre avec un dépolissage comparable à celui que l'on peut obtenir en utilisant un dépolissage chimique mais sans utiliser de composants fluorés indésirables. De plus, il a été découvert de manière surprenante qu'une telle méthode permettait de dépolir la surface d'un verre saphir de manière contrôlée.

Dans l'ensemble du présent texte, lorsqu'une gamme est indiquée, les extrémités sont incluses. En outre, toutes les valeurs entières et sous-domaines dans une gamme numérique sont expressément inclus comme si explicitement écrits.

D'autres caractéristiques et avantages de l'invention apparaîtront plus clairement à la lecture de la description suivante.

De préférence, la température à laquelle est opérée la méthode de l'invention est comprise entre 15 et 30°C et, de manière plus préférée, la température correspond à la température ambiante.

Selon l'invention, la feuille de verre peut avoir une épaisseur variant entre 0,1 et 25 mm.

La feuille de verre selon l'invention est faite de verre de type silico-sodo-calcique, alumino-silicate, borosilicate, ou saphir.

Le verre de l'invention peut être un verre coloré, clair ou extra-clair

De manière préférée, la feuille de verre selon l'invention est une feuille de verre silico-sodo-calcique. Avantageusement, selon ce mode de réalisation, la composition de base de la feuille de verre comprend, en une teneur exprimée en pourcentages en poids total de verre :

| | |
|---|---|
| SiO₂ | 60 - 75% |
| Al₂O₃ | 0 - 8% |
| B₂O₃ | 0 - 4% |
| CaO | 0 - 15% |
| MgO | 0 - 10% |
| Na₂O | 5 - 20% |
| K₂O | 0 - 10% |
| BaO | 0 - 5%. |

De manière préférée également, la feuille de verre selon l'invention est une feuille de verre saphir. Par « verre saphir », on entend usuellement un matériau cristallin transparent constitué de saphir (le plus souvent synthétique). Le verre saphir est particulièrement utilisé et avantageux dans le domaine de l'horlogerie de haut de gamme (montres, par exemple).

La méthode de fabrication d'une feuille de verre dépolie comprend une étape (i) de fluidisation de particules dans un premier fluide et un deuxième fluide par une technique de lit fluidisé, le premier fluide étant un gaz et le deuxième fluide étant un liquide, de manière à générer un flux des particules fluidisées présentant une vitesse comprise entre 5 et 20 mètres par seconde.

Selon l'invention, le premier fluide est un gaz et peut par exemple être de l'air, de l'azote ou de l'hélium. Selon un mode de réalisation de l'invention, le premier fluide est de l'air.

Selon l'invention, le deuxième fluide est un liquide comme de l'eau ou un polymère. Selon un mode de réalisation de l'invention, le deuxième fluide est de l'eau.

Selon un mode de réalisation tout préféré, le premier fluide est de l'air et le deuxième fluide est de l'eau.

Alternativement, le premier fluide et le deuxième fluide peuvent respectivement être un mélange de gaz et un mélange de liquides. On peut aussi prévoir l'ajout d'additifs appropriés dans le premier fluide et/ou le deuxième fluide, tel que par exemple un agent anti-mousse ou un agent dispersant dans le deuxième fluide.

Selon l'invention, les particules ont une taille moyenne comprise entre 5 et 500 microns. De manière préférée, les particules ont une taille moyenne comprise entre 5 et 250 microns. De manière plus préférée, les particules ont une taille moyenne comprise entre 5 et 100 microns, voire mieux, comprise entre 5 et 50 microns. Une taille de particules entre 5 et 50 microns permet de cibler encore une texture/aspect proche de ceux obtenus par dépolissage chimique. La taille moyenne des particules est déterminée sur un granulomètre laser en milieu liquide.

Avantageusement, les particules utilisées dans l'invention sont inertes, elles n'ont pas d'action chimique sur la surface du verre mais possèdent une résistance mécanique leur permettant d'abraser cette surface. La nature chimique et la forme des particules dépend du résultat souhaité. La dureté des particules est avantageusement supérieure à celle de la feuille de verre.

La quantité de particules fluidisées est de préférence comprise entre 5% et 60% du poids de deuxième fluide, tout préférentiellement entre 10% et 50%.

La méthode de fabrication d'une feuille de verre dépolie selon l'invention comprend également une étape (ii) de traitement d'une surface d'une feuille de verre par soumission de ladite surface audit flux de particules fluidisées, obtenues à l'étape (i).

Dans l'étape (ii) de traitement selon l'invention, les particules sont donc projetées à la surface d'une feuille de verre sous la forme d'un lit fluidisé biphasique sous pression. Avantageusement, la pression du flux de particules durant l'étape (ii) de traitement est comprise entre 2 et 15 bars, et de préférence comprise entre 4 et 10 bars.

Par exemple, dans la méthode de l'invention, durant l'étape (ii) de traitement, les particules fluidisées à l'étape (i) passent de la chambre de fluidisation à un dispositif de projection incluant au moins un moyen de projection, tel qu'une buse de projection. Une telle buse peut, de manière avantageuse, avoir une section transversale, par exemple circulaire ou rectangulaire, de surface comprise entre 5 et 20 mm² et, de préférence entre 8 et 15 mm². On choisira le nombre de moyens de projection en fonction notamment des dimensions de la feuille de verre à traiter par la méthode selon l'invention. La disposition du(es) moyen(s) de projection les uns par rapport aux autres est également adaptable aux besoins. De même, les moyens de projection peuvent être prévus fixes ou mobiles. Le dispositif de projection peut également inclure une pompe permettant d'amener, avec une pression réglable, les particules fluidisées jusqu'au(x) moyen(s) de projection.

Selon un mode de réalisation particulier de l'invention, à l'étape (ii) de traitement, la feuille de verre est convoyée dans un enceinte de traitement par un dispositif de convoyage tel qu'un convoyeur horizontal ou inversé, par exemple à une vitesse réglable entre 0 et 8 mètres par minute, de préférence entre 0 et 6 mètres par minute.

Durant l'étape (ii) de traitement, la surface de la feuille de verre est placée avantageusement à une distance de l'extrémité du dispositif de projection du flux de particules au niveau de laquelle le flux est projeté comprise entre 3 et 25 centimètres. De préférence, cette distance est comprise entre 5 et 20 centimètres.

Selon un mode de réalisation, la méthode de l'invention comprend une étape (iii) de lavage, consécutive à l'étape (ii) de traitement.

Selon un autre mode de réalisation, la méthode de l'invention comprend une étape de récupération dans laquelle les particules fluidisées sont récupérées pendant l'étape (ii) de traitement et/ou pendant l'étape (iii) de lavage, et sont ensuite recyclées au niveau de l'étape (i) de fluidisation. Un tel recyclage offre l'avantage de limiter la consommation de particules et du deuxième fluide.

Selon ce dernier mode, avantageusement, les particules récupérées à l'étape de récupération sont soumises à une étape de séparation afin de recycler au niveau de l'étape (i) de fluidisation des particules exemptes d'éventuels résidus de la surface traitée. La matière récupérée à l'étape de récupération comprend en effet essentiellement des particules fluidisées, mais comprend aussi des résidus de dépolissage de la surface traitée. De manière avantageuse, ces résidus sont séparés des particules destinées à être recyclées par l'intermédiaire d'un dispositif de séparation (par exemple, par filtration ou décantation).

Il est également possible grâce à la méthode de l'invention de traiter en partie seulement la surface d'une feuille de verre en y apposant au préalable un cache ou masque (par exemple, en cire ou en encre).

L'invention couvre également une feuille de verre obtenue par la méthode de l'invention, la feuille de verre étant une feuille de verre saphir ou encore une feuille de verre silico-sodo-calcique.

Les exemples qui suivent illustrent l'invention, sans intention de limiter de quelque façon sa couverture.

### Exemples

*Texture, propriétés optiques et couleur:*
Les propriétés optiques des feuilles de verre préparées tel que décrit ci-dessous ainsi que des échantillons de référence ont été caractérisées par :
- la transmission directe totale de la lumière ou transmission lumineuse (TL) ;
- la transmission de la lumière diffuse évaluée grâce au « voile » (ou « haze », caractérisant la diffusion aux grands angles de la lumière transmise) et grâce à la « clarté » (caractérisant la diffusion aux petits angles de la lumière transmise) ; ces deux paramètres ont été déterminés selon la norme ASTM D1003; et
- la brillance ou « gloss », caractérisant la réflexion spéculaire d'une surface par rapport à un standard (tel que, par exemple, un standard de verre noir certifié) conformément à la norme ASTM D523 à un angle spécifique, et il est exprimé en SGU (unités de gloss standard).

Le terme "diffuse" utilisée pour la transmission lumineuse concerne la proportion de lumière qui, en traversant le verre, est déviée du faisceau incident par dispersion de plus de 2,5°. L'expression "diffuse" utilisée pour la réflexion lumineuse concerne la proportion de lumière qui, par réflexion à l'interface verre/air, est déviée du faisceau réfléchi spéculairement par dispersion de plus de 2,5°.

Pour quantifier la transmission du verre dans le domaine du visible, on définit une transmission lumineuse (TL), calculée entre les longueurs d'onde de 380 et 780 nm selon la norme ISO9050, et mesurée avec l'illuminant D65 (TLD) tel que défini par la norme ISO/CIE 10526 en considérant l'observateur de référence colorimétrique C. I. E. 1931 tel que défini par la norme ISO/CIE 10527. La transmission lumineuse est mesurée ici selon cette norme et donnée pour une épaisseur de 4 mm (TLD4) sous un angle d'observation solide de 2°.

Les propriétés optiques ont été mesurées ici à partir de la surface dépolie.

Les propriétés de couleur des feuilles de verre préparées tel que décrit ci-dessus ainsi que des échantillons de référence ont été caractérisées par les paramètres CIELab L*, a* et b*. Ceux-ci ont été mesurés en réflexion avec les paramètres de mesure suivantes: illuminant C, 10°, SCI, carrelage blanc comme background, sur une caméra MINOLTA CM2600D. Les paramètres CIE L*a*b* ont été mesurés ici à partir de la surface opposée à la surface dépolie.

La texture des surfaces dépolies des feuille de verre préparées et des références ont été caractérisées par mesures de rugosité de surface, en utilisant un profileur optique Leica 3D Type de DCM3D, en utilisant la "carte Leica" logiciel, sur une longueur d'évaluation de 12 mm et avec un filtre gaussien dont la longueur d'onde de coupure est de 0,8 mm. L'échantillon à analyser est d'abord nettoyé avec un détergent et ensuite séché. Il est ensuite placé sous le microscope et le profil d'une acquisition 2D est alors initié avec les paramètres conventionnels (le logiciel applique une longueur d'onde de coupure par défaut λs de 2,5 microns). Les valeurs Ra, Rz et Rsm (exprimés en µm) définis dans la norme ISO 4287-1997 ont été déterminés.

*Set* # *1 d'exemples :*
- *Feuilles de verre dépolies de référence :* L'exemple 1.1 correspond à une feuille de verre silico-sodo-calcique commerciale (Matelux®) dépolie chimiquement en utilisant des composants fluorés, et constituant la cible à atteindre en termes de rendu esthétique et de toucher. L'exemple 1.2 correspond à une feuille de verre dépolie mécaniquement par sablage de façon connue en soi, en utilisant une taille moyenne de particules classiquement de 250 microns.
- *Préparation des feuilles de verre dépolies selon l'exemple comparatif 1.3 et les exemples 1.4-1.5 selon l'invention:*

Pour chaque exemple (1.3-5), une feuille de verre clair de type silico-sodo-calcique de 4 mm d'épaisseur et d'une surface de 20 cm x 20 cm a été lavée à l'eau désionisée, puis séchée. La feuille de verre a ensuite été fixée sur un support rigide dans une cabine de pulvérisation, à une distance de 15 cm d'une buse de projection. Un mélange de poudre de carbure de silicium (SiC) de taille moyenne de particules définie (3, 10 et 18 microns) a été mise en suspension à une concentration de 20% en poids dans de l'eau. Le mélange a ensuite été envoyé dans la buse de projection avec de l'air comprimé, afin de former un lit fluidisé présentant une vitesse comprise entre 5 et 20 mètres par seconde. Les particules fluidisées ont ensuite été projetées sur la surface de la feuille de verre. La buse a été déplacée de manière à traiter toute la surface de la feuille de verre.

La feuille de verre a ensuite été raclée puis nettoyée sous un jet d'eau afin d'éliminer toutes particules résiduelles. Finalement, la surface du verre a été nettoyée avec un détergent aqueux.

Résultats :
Les paramètres de texture ainsi que les propriétés optiques et de couleur des feuilles de verre préparées sont données dans le Tableau 1, ainsi que les données pour des échantillons de référence (une feuille de verre Matelux® obtenue par dépolissage acide et une feuille de verre obtenue de façon connue par dépolissage mécanique/sablage).

Les valeurs exposées dans le tableau1 montrent de façon très claire que la méthode de l'invention permet d'obtenir un produit quasiment identique en termes de propriétés optiques, de couleur et de rugosité (toucher doux) au produit Matelux® commercial. Un dépolissage par lit fluidisé avec des particules trop petites (ex 1.3), tel que décrit dans le brevet EP1882551B1, ne permet pas d'atteindre cette cible et donne des valeurs très éloignées en termes de propriétés optiques (voile et clarté) et de rugosité en particulier. De même, un dépolissage mécanique par sablage classique (sans lit fluidisé) ne permet pas non plus d'atteindre la cible.

Ainsi, ces résultats montrent que la méthode de l'invention permet d'obtenir un produit type Matelux® mais sans avoir recours à un dépolissage chimique et ses inconvénients. En particulier, la méthode de l'invention est ainsi moins sensible à l'uniformité/la propreté de la surface attaquée qu'un dépolissage acide nécessitant un nettoyage au préalable de la surface afin d'obtenir une texture uniforme (cas du Matelux®) ; et il est donc également respectueux de l'environnement, de la santé et aisé d'un point de vue de la sécurité.

**Tableau 1**

| | | | **Propriétés optiques** | | | | **Couleur** | | | **Rugosité** | | |
|---|---|---|---|---|---|---|---|---|---|---|---|---|
| **Ex.** | **Méthode de préparation** | **Taille moyenne des particules (µm)** | **TL (%)** | **Voile (%)** | **Clarté (%)** | **Brillance (SGU, 60°)** | **L*** | **a*** | **b*** | **Ra (µm)** | **Rz (µm)** | **RSm (µm)** |
| 1.1 | dépolissage acide | - | 87,40 | 94,9 | 7,9 | 4,4 | 79,1 | -0,95 | 2,91 | 1,85 | 10,8 | 53,8 |
| **1.2** | Sablage mécanique | 250µm | 79,2 | 91,2 | 50,7 | 4,5 | 75,2 | -0,56 | 2,76 | 2,34 | 21,7 | 75,6 |
| 1.3 | dépolissage par lit fluidisé | 3µm | 90,3 | 4,98 | 99,5 | 110 | 86,6 | -0,65 | 3,47 | 0,02 | 0,35 | 34,2 |
| **1.4** | **dépolissage par lit fluidisé** | **10µm** | **85,0** | **90,5** | **8,0** | **3,8** | **77,5** | **-0,43** | **3,65** | **0,514** | **3,90** | **26,7** |
| **1.5** | **dépolissage par lit fluidisé** | **18µm** | **84,2** | **95,3** | **5,4** | **3,4** | **76,2** | **-0,44** | **3,32** | **0,768** | **5,12** | **36,3** |

*Set* # *2 d'exemples :*
- *Feuilles de verre de référence :* L'exemple 2.1 correspond à une feuille de verre saphir commerciale.
- *Préparation d'une feuille de verre dépolie selon l'exemple comparatif* 2.2 : Une feuille de verre saphir de 0,7 mm d'épaisseur et d'une surface de 5cm x 5cm a été lavée à l'eau désionisée, puis séchée. La feuille de verre a ensuite été dépolie chimiquement en utilisant une solution classique de dépolissage acide, composée en volume de 50% NH₄HF₂, 25% eau, 6% H₂SO₄ concentré, 6% d'une solution aqueuse de HF 50% en poids, 10% K₂SO₄, 3% (NH₄)₂SO₄, à 20 - 25 °C, avec une mise en contact entre le verre et la solution acide de 5 minutes. Finalement, la solution acide a été enlevée et la surface du verre a été nettoyée avec un détergent aqueux.
- *Préparation des feuilles de verre dépolies selon les exemples de l'invention 2.3 et 2.4 :*
   Pour chaque exemple (2.3 et 2.1), une feuille de verre saphir de 0,7 mm d'épaisseur et d'une surface de 5 cm x 5 cm a été lavée à l'eau désionisée, puis séchée. La feuille de verre a ensuite été fixée sur un support rigide dans une cabine de pulvérisation, à une distance de x cm d'une buse de projection (x = 9cm pour l'exemple 2.3 et 5cm pour l'exemple 2.4). Un mélange de poudre de carbure de silicium (SiC) de taille moyenne de particules définie (10 microns) a été mise en suspension à une concentration de 20% en poids dans de l'eau. Le mélange a ensuite été envoyé dans la buse de projection avec de l'air comprimé, afin de former un lit fluidisé présentant une vitesse comprise entre 5 et 20 mètres par seconde. Les particules fluidisées ont ensuite été projetées sur la surface de la feuille de verre. La buse a été déplacée de manière à traiter toute la surface de la feuille de verre.

La feuille de verre a ensuite été raclée puis nettoyée sous un jet d'eau afin d'éliminer toutes particules résiduelles. Finalement, la surface du verre a été nettoyée avec un détergent aqueux.

Les paramètres de texture des feuilles de verre préparées sont données dans le Tableau 2, ainsi que les données pour l'échantillon de référence (feuille de verre saphir commerciale et non traitée).

**Tableau 2**

| **Ex.** | **Méthode de préparation** | **Ra (nm)** | **Rz (µm)** | **Rq (nm)** | **RSm (µm)** |
|---|---|---|---|---|---|
| **2.1** | -- | *Pas de rugosité détectable* | | | |
| **2.2** | dépolissage acide | *Pas de rugosité détectable* | | | |
| **2.3** | Dépolissage par lit fluidisé | 28,5 | 0,335 | 38,8 | 13,3 |
| **2.4** | Dépolissage par lit fluidisé | 58,5 | 0,671 | 83,3 | 15 |

Résultats :
Les valeurs exposées dans le tableau 2 confirment bien que la méthode de dépolissage chimique ne permet pas d'attaquer significativement la surface d'une feuille de verre saphir (comparaison ex2.1 et ex2.2). Aucune rugosité significative n'est détectée et aucune différence n'est constatée entre l'exemple 2.1 (verre initial non traité) et l'exemple 2.2.

Par contre, ces résultats montrent que la méthode de l'invention permet de dépolir de manière significative la surface d'un verre saphir (exs 2.3 et 2.4), connu pour être extrêmement compliqué à dépolir.

## Revendications

1. Méthode de fabrication d'une feuille de verre silico-sodo-calcique, alumino-sicilate, borosilicate, ou saphir dépolie comprenant :
(i) une étape de fluidisation de particules dans un premier fluide et un deuxième fluide par une technique de lit fluidisé, le premier fluide étant un gaz et le deuxième fluide étant un liquide, de manière à générer un flux des particules fluidisées présentant une vitesse comprise entre 5 et 20 mètres par seconde; et
(ii) une étape de traitement d'une surface d'une feuille de verre par soumission de ladite surface audit flux de particules fluidisées ;
**caractérisée en ce que** les particules ont une taille moyenne comprise entre 5 et 500 microns.

2. Méthode selon la revendication 1, **caractérisée en ce que** le premier fluide est de l'air.

3. Méthode selon l'une des revendications précédentes, **caractérisée en ce que** le deuxième fluide est de l'eau.

4. Méthode selon l'une des revendications 2 ou 3, **caractérisée en ce que** le premier fluide est de l'air et le deuxième fluide est de l'eau.

5. Méthode selon l'une des revendications précédentes, **caractérisée en ce que** la température à laquelle elle est opérée est comprise entre 15 et 30°C.

6. Méthode selon l'une des revendications précédentes, **caractérisée en ce qu'**elle comprend une étape (iii) de lavage, consécutive à l'étape (ii) de traitement.

7. Méthode selon l'une des revendications précédentes, **caractérisée en ce qu'**elle comprend une étape de récupération dans laquelle les particules fluidisées sont récupérées pendant l'étape (ii) de traitement et/ou pendant l'étape (iii) de lavage, et sont ensuite recyclées au niveau de l'étape (i) de fluidisation.

8. Méthode selon l'une des revendications précédentes, **caractérisée en ce que** la pression du flux de particules dans l'étape (ii) de traitement est comprise entre 4 et 10 bars.

9. Méthode selon l'une des revendications précédentes, **caractérisée en ce que** la quantité de particules fluidisées est comprise entre 5% et 60% du poids de deuxième fluide.

10. Méthode selon l'une des revendications précédentes, **caractérisée en ce que** les particules ont une taille moyenne comprise entre 5 et 100 microns.

11. Méthode selon l'une des revendications précédentes, **caractérisée en ce que** les particules ont une taille moyenne comprise entre 5 et 50 microns.

12. Méthode selon l'une des revendications précédentes, **caractérisée en ce que** la feuille de verre est une feuille de verre saphir.

13. Méthode selon l'une des revendications précédentes 1 à 11, **caractérisée en ce que** la feuille de verre est une feuille de verre silico-sodo-calcique.

## Patentansprüche

1. Verfahren zur Herstellung einer mattierten Kalk-Natron-Silikat-, Aluminosilikat-, Borosilikat- oder Saphirglasscheibe, umfassend:
(i) einen Schritt des Fluidisierens von Partikeln in einem ersten Fluid und einem zweiten Fluid mit einer Wirbelschichttechnik, wobei das erste Fluid ein Gas ist und das zweite Fluid eine Flüssigkeit ist, so dass ein Strom der fluidisierten Partikel erzeugt wird, der eine Geschwindigkeit zwischen 5 und 20 Meter pro Sekunde aufweist; und
(ii) einen Schritt des Behandelns einer Oberfläche einer Glasscheibe durch Beaufschlagen der Oberfläche mit dem Strom fluidisierter Partikel;
**dadurch gekennzeichnet, dass** die Partikel eine mittlere Größe zwischen 5 und 500 Mikrometer haben.

2. Verfahren nach Anspruch 1, **dadurch gekennzeichnet, dass** das erste Fluid Luft ist.

3. Verfahren nach einem der vorhergehenden Ansprüche, **dadurch gekennzeichnet, dass** das zweite Fluid Wasser ist.

4. Verfahren nach einem der Ansprüche 2 oder 3, **dadurch gekennzeichnet, dass** das erste Fluid Luft ist und das zweite Fluid Wasser ist.

5. Verfahren nach einem der vorhergehenden Ansprüche, **dadurch gekennzeichnet, dass** die Temperatur, bei der gearbeitet wird, zwischen 15 und 30 °C beträgt.

6. Verfahren nach einem der vorhergehenden Ansprüche, **dadurch gekennzeichnet, dass** es einen Schritt (iii) des Spülens nach dem Schritt (ii) des Behandelns umfasst.

7. Verfahren nach einem der vorhergehenden Ansprüche, **dadurch gekennzeichnet, dass** es einen Schritt des Rückgewinnens umfasst, bei dem die fluidisierten Partikel während des Schritts (ii) des Behandelns und/oder während des Schritts (iii) des Spülens zurückgewonnen werden und anschließend im Schritt (i) des Fluidisierens recycelt werden.

8. Verfahren nach einem der vorhergehenden Ansprüche, **dadurch gekennzeichnet, dass** der Druck des Partikelstroms im Schritt (ii) des Behandelns zwischen 4 und 10 bar beträgt.

9. Verfahren nach einem der vorhergehenden Ansprüche, **dadurch gekennzeichnet, dass** die Menge fluidisierter Partikel zwischen 5 % und 60 % des Gewichts des zweiten Fluids beträgt.

10. Verfahren nach einem der vorhergehenden Ansprüche, **dadurch gekennzeichnet, dass** die Partikel eine mittlere Größe zwischen 5 und 100 Mikrometer haben.

11. Verfahren nach einem der vorhergehenden Ansprüche, **dadurch gekennzeichnet, dass** die Partikel eine mittlere Größe zwischen 5 und 50 Mikrometer haben.

12. Verfahren nach einem der vorhergehenden Ansprüche, **dadurch gekennzeichnet, dass** die Glasscheibe eine Saphirglasscheibe ist.

13. Verfahren nach einem der vorhergehenden Ansprüche 1 bis 11, **dadurch gekennzeichnet, dass** die Glasscheibe eine Kalk-Natron-Silikatglasscheibe ist.

## Claims

1. Method for the manufacture of an etched sheet of soda-lime-silica, aluminosilicate, borosilicate or sapphire glass, comprising:
(i) a stage of fluidization of particles in a first fluid and a second fluid by a fluidized bed technique, the first fluid being a gas and the second fluid being a liquid, so as to generate a stream of fluidized particles exhibiting a velocity of between 5 and 20 metres per second; and
(ii) a stage of treatment of a surface of a glass sheet by subjecting said surface to said stream of fluidized particles;
**characterized in that** the particles have a mean size of between 5 and 500 microns.

2. Method according to Claim 1, **characterized in that** the first fluid is air.

3. Method according to either of the preceding claims, **characterized in that** the second fluid is water.

4. Method according to either of Claims 2 and 3, **characterized in that** the first fluid is air and the second fluid is water.

5. Method according to one of the preceding claims, **characterized in that** the temperature at which it is carried out is between 15°C and 30°C.

6. Method according to one of the preceding claims, **characterized in that** it comprises a washing stage (iii), following upon the treatment stage (ii).

7. Method according to one of the preceding claims, **characterized in that** it comprises a recovery stage in which the fluidized particles are recovered during the treatment stage (ii) and/or during the washing stage (iii), and are subsequently recycled in the fluidization stage (i).

8. Method according to one of the preceding claims, **characterized in that** the pressure of the stream of particles in the treatment stage (ii) is between 4 and 10 bar.

9. Method according to one of the preceding claims, **characterized in that** the amount of fluidized particles is between 5% and 60% of the weight of the second fluid.

10. Method according to one of the preceding claims, **characterized in that** the particles have a mean size of between 5 and 100 microns.

11. Method according to one of the preceding claims, **characterized in that** the particles have a mean size of between 5 and 50 microns.

12. Method according to one of the preceding claims, **characterized in that** the glass sheet is a sheet of sapphire glass.

13. Method according to one of the preceding Claims 1 to 11, **characterized in that** the glass sheet is a sheet of soda-lime-silica glass.
